# EUROPÄISCHE PATENTSCHRIFT

(11) **EP 2 752 680 B1**
(45) Veröffentlichungstag und Bekanntmachung des Hinweises auf die Patenterteilung: **11.05.2016**
(21) Anmeldenummer: 13150268.4
(22) Anmeldetag: 04.01.2013
(51) Int. Cl.: G01S 19/01, G01S 3/14, G01S 5/02, G01S 1/08

(54) **Suchsystem und Verfahren zum Suchen eines Verschütteten**
Search system and method for searching for a buried person
Système de recherche et procédé de recherche d'une personne ensevelie

(43) Veröffentlichungstag der Anmeldung: 09.07.2014
(73) Patentinhaber: Ortovox Sportartikel GmbH, 82024 Taufkirchen (DE)
(72) Erfinder: Matzner, Rolf, Dr., 80639 München (DE)
(74) Vertreter: Hofstetter, Schurack & Partner

(56) Entgegenhaltungen:
- EP-A1- 1 577 679
- EP-A1- 1 785 169
- CA-A1- 2 443 751
- DE-A1-102011 003 154
- DE-A1-102011 010 499

## Beschreibung

Die vorliegende Erfindung betrifft ein Suchsystem zur Verschüttetensuche umfassend eine Radiovorrichtung mit einer Empfangsvorrichtung, die mindesten eine Empfangsantenne umfasst und ausgelegt ist, das Feld einer Senderantenne zu empfangen, wobei die Radiovorrichtung ausgelegt ist, die Richtung des Feldvektors der Senderantenne relativ zu der mindestens einen Empfangsantenne zu ermitteln, sowie eine Benutzerschnittstellenvorrichtung mit mindestens einer Schnittstelle zum Koppeln mit der Radiovorrichtung sowie mindestens einer Ausgabevorrichtung zur Ausgabe von von einem Benutzer wahrnehmbarer, aus der Richtung des ermittelten Feldvektors abgeleiteter Suchinformation, wobei die Radiovorrichtung und die Benutzerschnittstellenvorrichtung jeweils als separate Baueinheiten ausgebildet sind, die jeweils von einem eigenen Gehäuse umfasst sind. Sie betrifft überdies ein entsprechendes Verfahren zum Suchen eines Verschütteten.

Ein gattungsgemäßes Suchsystem sowie ein gattungsgemäßes Verfahren sind bekannt aus der WO 2012/107171 A1. Die Grundintention eines derartigen zweiteiligen Suchsystems besteht darin, dass als Benutzerschnittstellenvorrichtung mobile Kommunikationsendgeräte, vorzugsweise in Form von Smartphones, PDAs, etc. genutzt werden können, wodurch die Verbreitung derartiger Suchsysteme zur Verschüttetensuche, insbesondere zur Suche von Lawinenverschütteten, erheblich erhöht werden kann. Dabei ist zu berücksichtigen, dass grundsätzlich die Ortung jeglicher Art von Objekten, also Personen und/oder Gegenständen vorgenommen werden kann, wie beispielsweise im Katastrophenfall, bei Erdbeben und Gebäudeeinstürzen, aber auch um Personen in Paniksituationen aufzuspüren oder beispielsweise entlaufene Kinder wiederzufinden. Dabei übernimmt die Radiovorrichtung insbesondere die Funktionen Senden, Empfangen sowie die Signalaufbereitung, während die Benutzerschnittstellenvorrichtung insbesondere die Funktionen komplexer Berechnungen, der Darstellung sowie der Sensorik übernimmt. Ein vergleichbares Suchsystem wird von der Girsberger Elektronik AG, Mountain Rescue Technology, Oberdorfstrasse 7, 8416 Flaach, Schweiz, unter der Bezeichnung ARS457 vertrieben.

Die zweiteilige Ausführung eines Systems zur Verschüttetensuche bietet weiterhin den Vorteil, dass die Empfangselektronik, die in der Radiovorrichtung angeordnet ist, räumlich entfernt von der Benutzerschnittstellenvorrichtung betrieben werden kann. Dadurch wird die Empfindlichkeit der mindestens einen Antenne verbessert, da sich EMI-Störungen, die die Antennenfunktion beeinträchtigen können und insbesondere durch das gegebenenfalls vorhandene Display bzw. den Prozessor der Benutzerschnittstellenvorrichtung erzeugt werden, weniger auswirken. Außerdem können größere und empfindlichere Antennen verwendet werden, da beispielsweise bei Anordnung der Radiovorrichtung an einem Hüftgurt oder in einem Rucksack mehr Bauraum zur Verfügung steht und eine durch größere Antennen gegebenenfalls einhergehende Gewichtserhöhung ebenfalls kaum als störend empfunden wird.

Wie sich jedoch gezeigt hat, dauert die Suche mit einem bekannten gattungsgemäßen Suchsystem länger als mit bekannten einteiligen Suchgeräten.

Aus der EP 1 785 169 A1 ist ein Such- und Sendegerät bekannt, bei dem Lagebestimmungsmittel starr mit dem Suchgerät verbunden sind, wobei das Suchgerät einstückig ausgebildet ist.

Aus der EP 1 577 679 A1 ist ein Suchgerät zur Ortung eines Senders, insbesondere ein Lawinen-Verschütteten-Suchgerät bekannt, bei dem das Gehäuse die Form eines klappbaren Mobiltelefons mit einem Scharnier aufweist. In dem Such- und Sendegerät sind Neigungssensoren vorgesehen, die Sensorsignale an die Signalverarbeitungseinrichtung ausgeben, welche die Lage des Suchgeräts bezogen auf eine Horizontalebene repräsentieren.

Insbesondere vor dem Hintergrund, dass bei der Bergung von Verschütteten nur ein sehr knapp bemessenes Zeitfenster zur Verfügung steht, sodass bereits eine Verzögerung der Bergung von wenigen Minuten über Leben und Tod entscheiden kann, besteht die Aufgabe der vorliegenden Erfindung darin, ein gattungsgemäßes Suchsystem bzw. ein gattungsgemäßes Verfahren derart zu verbessern, dass eine effektivere Suche, das heißt eine Suche mit einem reduzierten Zeitaufwand, ermöglicht wird.

Diese Aufgabe wird gelöst durch ein Suchsystem mit den Merkmalen von Patentanspruch 1 sowie durch ein Verfahren mit den Merkmalen von Patentanspruch 20.

Der vorliegenden Erfindung liegt folgende Erkenntnis zugrunde: Bei der zweiteiligen Ausführung eines Suchsystems zur Verschüttetensuche wird die Radiovorrichtung zweckmäßigerweise fest mit dem Körper verbunden getragen, beispielsweise als Hüftgurt oder als Teil eines Lawinenrucksacks, etc. Die Benutzerschnittstellenvorrichtung wird hingegen wie ein klassisches Lawinenverschüttetensuchgerät in der Hand gehalten.

Es liegt nun im Verhalten des Menschen, in erster Linie den Kopf in die Richtung seiner Aufmerksamkeit zu drehen und gegebenenfalls mit der Hand in diese Richtung zu zeigen. Erst in zweiter Linie richtet der Mensch seinen gesamten Körper in diese Richtung aus. Bei einem bekannten gattungsgemäßen zweiteiligen Suchsystem wird auf der Ausgabevorrichtung der Benutzerschnittstellenvorrichtung nur dann die Suchrichtung korrekt angezeigt, wenn die Benutzerschnittstellenvorrichtung gleich orientiert ist wie die Radiovorrichtung. Ist beispielsweise die Ausgabevorrichtung als Anzeigevorrichtung ausgebildet, auf der ein dargestellter Pfeil die Suchrichtung anzeigt, so weist der Pfeil in die falsche Richtung, sobald die Benutzerschnittstellenvorrichtung und die Radiovorrichtung nicht mehr gleich orientiert sind. Dies ist bedauerlicherweise während der überwiegenden Zeit der Suche der Fall. Daraus folgen Irrwege, die die Suche zeitlich verzögern oder gänzlich verhindern. Erfindungsgemäß wird dieses Problem dadurch behoben, dass die an den Benutzer ausgegebene Suchrichtung durch die Richtung bestimmt wird, in welche die Benutzerschnittstellenvorrichtung zeigt, nicht jedoch durch die Ausrichtung der Radiovorrichtung.

Erfindungsgemäß umfasst deshalb das Suchsystem Bestimmungsmittel zum Bestimmen der relativen Orientierung der Benutzerschnittstellenvorrichtung zur Radiovorrichtung. Unter der Bezeichnung der "relativen Orientierung" ist erfindungsgemäß insbesondere der ebene oder räumliche Winkel zwischen mindestens einer Bezugsachse der Benutzerschnittstellenvorrichtung und mindestens einer Bezugsachse der Radiovorrichtung zu verstehen.

Die Radiovorrichtung ist üblicherweise als vektorieller Empfänger des magnetischen oder elektrischen Felds einer Senderantenne ausgeprägt. Die Richtung des Feldvektors wird hier grundsätzlich relativ zur Orientierung der mindestens einen Antenne der Empfangsvorrichtung gemessen. Diese Orientierung stimmt in dem oben dargestellten Beispiel mit der Ausrichtung des gesamten Körpers, im Falle eine Hüftgurts mit der Ausrichtung des Beckens, des Suchenden überein. In der Benutzerschnittstellenvorrichtung hingegen muss zur korrekten Anzeige entsprechend der Hand/Arm-Richtung des Suchenden der Feldvektor relativ zu einer festen Bezugsachse der Benutzerschnittstellenvorrichtung selbst bekannt sein.

Bevorzugt ist das Suchsystem weiterhin ausgelegt, die von den Bestimmungsmitteln bestimmte relative Orientierung der Benutzerschnittstellenvorrichtung zur Radiovorrichtung mit der ermittelten Richtung des Feldvektors derart zu kombinieren, dass über die Ausgabevorrichtung die Richtung des Feldvektors relativ zur Orientierung der Benutzerschnittstellenvorrichtung ausgebbar ist. Die Ausgabevorrichtung stellt bevorzugt eine Anzeigevorrichtung, insbesondere ein Display, dar. Allerdings können als Ausgabevorrichtung beispielsweise auch Lautsprecher oder Leuchtdioden vorgesehen sein, um dem Suchenden in bekannter Weise eine Information zur Suchrichtung zukommen zu lassen.

Die Bestimmungsmittel können in der Benutzerschnittstellenvorrichtung und/oder der Radiovorrichtung angeordnet sein. Bei einer ersten bevorzugten Variante umfassen die Bestimmungsmittel einen ersten und einen zweiten Lagesensor, wobei die Radiovorrichtung den ersten Lagesensor umfasst und die Benutzerschnittstellenvorrichtung den zweiten Lagesensor, wobei der erste Lagesensor ausgelegt ist, die Orientierung der Radiovorrichtung relativ zu einem externen, systemfremden Bezugssystem zu bestimmen, wobei der zweite Lagesensor ausgelegt ist, die Orientierung der Benutzerschnittstellenvorrichtung relativ zu dem selben externen, systemfremden Bezugssystem zu bestimmen. Dabei sind der erste und der zweite Lagesensor insbesondere ausgelegt, eine Orientierung gegenüber dem Erdmagnetfeld, einem globalen oder lokalen Positionierungssystem, insbesondere GPS oder Galileo, zu bestimmen. Der Winkel des Feldvektors relativ zur Ausrichtung der ergibt sich als Summe aus dem gemessenen Winkel des Feldvektors relativ zur Radiovorrichtung und der Differenz der Ausrichtungen von Radiovorrichtung und Benutzerschnittstellenvorrichtung gegenüber dem externen, systemfremden Bezugssystem.

Bei einer zweiten bevorzugen Variante umfassen die Bestimmungsmittel Mittel zum Erzeugen eines systemeigenen Bezugssystems sowie zumindest einen Lagesensor zum Bestimmen einer Orientierung relativ zu diesem systemeigenen Bezugssystem, wobei die Mittel zum Erzeugen des systemeigenen Bezugssystems in einer ersten Vorrichtung aus der Gruppe der Radiovorrichtung und der Benutzerschnittstellenvorrichtung angeordnet sind, wobei der Lagesensor in der zweiten Vorrichtung aus dieser Gruppe angeordnet ist. Die Mittel zum Erzeugen eines systemeigenen Bezugssystems können ausgelegt sein, ein Feld, insbesondere ein magnetisches oder elektrisches Feld, zu erzeugen, wobei die Mittel zur Bestimmung der Orientierung relativ zu diesem systemeigenen Bezugssystem mindestens einen Lagesensor umfassen, der ausgelegt ist, das Feld zur Bestimmung der Orientierung relativ zu dem systemeigenen Bezugssystem auszuwerten. Auf diese Weise lässt sich ein erfindungsgemäßes Suchsystem besonders kostengünstig realisieren. Unabhängig davon kann selbstverständlich mindestens ein weiterer Lagesensor vorgesehen sein, der ausgelegt ist, die Orientierung der ersten oder der zweiten Vorrichtung relativ zu einem externen, systemfremden Bezugssystem zu bestimmen, siehe oben. Auf diese Weise lassen sich auch bei der zweiten Variante die aus dem Stand der Technik bekannten Vorteile erzielen, die beispielsweise bei einem auf das Erdmagnetfeld bezogenen Suchsystem darin bestehen, dass weiterhin eine Suchinformation ausgegeben wird, auch wenn das von der Senderantenne abgegebene Signal verloren geht oder auf dem Weg zum Verschütteten Hindernisse umgangen werden müssen.

Hinsichtlich der Frage, in welcher der beiden Vorrichtungen die Umrechnung der Orientierung des gemessenen Feldvektors in das Bezugssystem der Benutzerschnittstellenvorrichtung vorgenommen wird, lassen sich erfindungsgemäß verschiedene Umsetzungen unterscheiden:
- Fall A:: Die Benutzerschnittstellenvorrichtung ist ausgelegt, die von den Bestimmungsmitteln bestimmte relative Orientierung der Benutzerschnittstellenvorrichtung zur Radiovorrichtung mit der ermittelten Richtung des Feldvektors zu kombinieren. In dem Fall, dass zwei Lagesensoren vorgesehen sind, kann dann die Radiovorrichtung ausgelegt sein, die vom ersten Lagesensor bestimmte Orientierung an die Benutzerschnittstellenvorrichtung zu übertragen, wobei die Benutzerschnittstellenvorrichtung ausgelegt ist, ihre relative Orientierung zur Radiovorrichtung zu bestimmen. In dem Fall, dass Mittel zum Erzeugen eines systemeigenen Bezugssystems vorgesehen sind sowie mindestens ein Lagesensor zum Bestimmen einer Orientierung relativ zu diesem systemeigenen Bezugssystem, können in einer ersten Ausbildung die Mittel zum Erzeugen eines systemeigenen Bezugssystems in der Radiovorrichtung angeordnet sein, wobei der Lagesensor in der Benutzerschnittstellenvorrichtung angeordnet ist, wobei die Benutzerschnittstellenvorrichtung ausgelegt ist, die relative Orientierung der Benutzerschnittstellenvorrichtung zur Radiovorrichtung zu bestimmen. Alternativ können die Mittel zum Erzeugen eines systemeigenen Bezugssystems in der Benutzerschnittstellenvorrichtung angeordnet sein, wobei der Lagesensor in der Radiovorrichtung angeordnet ist, wobei die Radiovorrichtung ausgelegt ist, die relative Orientierung der Benutzerschnittstellenvorrichtung zur Radiovorrichtung zu bestimmen und an die Benutzerschnittstellenvorrichtung zu übertragen.
- Fall B:: Die Radiovorrichtung ist ausgelegt, die von den Bestimmungsmitteln bestimmte relative Orientierung der Benutzerschnittstellenvorrichtung zur Radiovorrichtung mit der ermittelten Richtung des Feldvektors zu kombinieren. Dabei kann für den Fall, dass zwei Lagesensoren vorgesehen sind, die Benutzerschnittstellenvorrichtung ausgelegt sein, die vom zweiten Lagesensor bestimmte Orientierung an die Radiovorrichtung zu übertragen, wobei die Radiovorrichtung ausgelegt ist, ihre relative Orientierung zur Benutzerschnittstellenvorrichtung zu bestimmen. In dem Fall, dass Mittel zum Erzeugen eines systemeigenen Bezugssystems sowie mindestens ein Lagesensor zum Bestimmen einer Orientierung relativ zu diesem systemeigenen Bezugssystem vorgesehen sind, können die Mittel zum Erzeugen eines systemeigenen Bezugssystems in der Radiovorrichtung angeordnet sein, wobei dann der Lagesensor in der Benutzerschnittstellenvorrichtung angeordnet ist, wobei die Benutzerschnittstellenvorrichtung ausgelegt ist, die relative Orientierung der Benutzerschnittstellenvorrichtung zur Radiovorrichtung zu bestimmen und an die Radiovorrichtung zu übertragen. Alternativ können die Mittel zum Erzeugen eines systemeigenen Bezugssystems in der Benutzerschnittstellenvorrichtung angeordnet sein, wobei der Lagesensor in der Radiovorrichtung angeordnet ist, wobei die Radiovorrichtung ausgelegt ist, die relative Orientierung der Benutzerschnittstellenvorrichtung zur Radiovorrichtung zu bestimmen.

Wie bereits erwähnt, stellt die Ausgabevorrichtung bevorzugt eine Anzeigevorrichtung dar, wobei die Suchinformation eine Richtungsinformation, insbesondere einen Pfeil, darstellt, die die Richtung des Feldvektors der Senderantenne bezogen auf die Orientierung der Benutzerschnittstellenvorrichtung wiedergibt. Auf diese Weise ist es für einen Suchenden besonders einfach möglich, die Suchrichtung fortwährend, das heißt quasi in Echtzeit, zu erfassen, um dadurch den Zeitaufwand bis zum Aufspüren des Verschütteten möglichst gering zu halten.

Der jeweilige Lagesensor kann ausgelegt sein, die Orientierung der jeweiligen Vorrichtung zweidimensional im Sinne eines ebenen Winkels zu ermitteln. Es kann allerdings auch vorgesehen sein, dass der jeweilige Lagesensor ausgelegt ist, die Orientierung der jeweiligen Vorrichtung dreidimensional im Sinne eines Raumwinkels zu ermitteln. Auf diese Weise kann erreicht werden, dass eine schräg nach unten, in Richtung eines in der Tiefe Verschütteten gehaltene Benutzerschnittstellenvorrichtung ein genau dieser Blickrichtung entsprechendes Bild zeigt, auch wenn der Suchende aufrecht steht und lediglich den Arm mit der Benutzerschnittstellenvorrichtung schräg nach unten hält. Im zweidimensionalen Fall hingegen wird die Richtung in der Ebene der Erdoberfläche angezeigt.

Die erste Schnittstelle stellt bevorzugt eine Luftschnittstelle, insbesondere eine Funkschnittstelle, oder eine flexible mechanische Schnittstelle, insbesondere eine Kabelschnittstelle, dar. Auf diese Weise wird eine besonders hohe Bedienerfreundlichkeit erreicht, da die Benutzerschnittstellenvorrichtung unabhängig von der Radiovorrichtung bewegt werden kann.

Weitere bevorzugte Ausführungsformen ergeben sich aus den Unteransprüchen.

Die mit Bezug auf das erfindungsgemäße Suchsystem vorgestellten bevorzugten Ausführungsformen und deren Vorteile gelten entsprechend, soweit anwendbar, für das erfindungsgemäße Verfahren.

Im Nachfolgenden werden nunmehr Ausführungsformen der vorliegenden Erfindung unter Bezugnahme auf die beigefügten Zeichnungen näher beschrieben. Es zeigen:
- Fig. 1: in schematischer Darstellung ein erstes Ausführungsbeispiel eines erfindungsgemäßen Suchsystems, bei dem sowohl die Radiovorrichtung als auch die Benutzerschnittstellenvorrichtung einen Lagesensor umfasst;
- Fig. 2: in schematischer Darstellung ein zweites Ausführungsbeispiel eines erfindungsgemäßen Suchsystems, bei dem ein systemeigenes Bezugssystem erzeugt und zur Ermittlung der relativen Orientierung der Benutzerschnittstellenvorrichtung zur Radiovorrichtung ausgewertet wird;
- Fig. 3: in schematischer Darstellung ein erstes Ausführungsbeispiel zur Umrechnung der Orientierung des gemessenen Feldvektors in das Koordinatensystem der Benutzerschnittstellenvorrichtung; und
- Fig. 4: in schematischer Darstellung ein zweites Ausführungsbeispiel zur Umrechnung der Orientierung des gemessenen Feldvektors in das Koordinatensystem der Benutzerschnittstellenvorrichtung.

In den Zeichnungen werden für gleiche und gleich wirkende Bauelemente dieselben Bezugszeichen verwendet. Diese werden der Übersichtlichkeit halber nur einmal eingeführt.

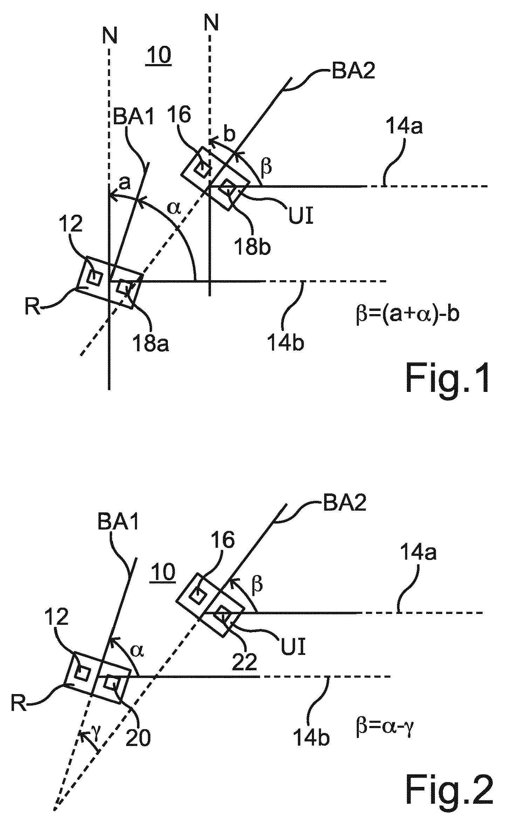

Fig. 1 zeigt in schematischer Darstellung ein erstes Ausführungsbeispiel eines erfindungsgemäßen Suchsystems 10. Dieses umfasst eine Radiovorrichtung R mit einer Empfangsvorrichtung 12, die mindestens eine Empfangsantenne, bevorzugt drei Empfangsantennen, umfasst und ausgelegt ist, das Feld einer Senderantenne eines Verschütteten zu empfangen. Beispielhaft sind Feldlinien 14a, 14b dieses Felds eingezeichnet. Die Radiovorrichtung R ist ausgelegt, die Richtung des Feldvektors der Senderantenne relativ zu der mindestens einen Empfangsantenne zu ermitteln. Die so ermittelte Richtung des Feldvektors wird bevorzugt auf eine Bezugsachse BA1 der Radiovorrichtung R bezogen. Vorliegend gibt der Winkel α die Richtung des Feldvektors bezogen auf die Bezugsachse BA1 der Radiovorrichtung R wieder. Das erfindungsgemäße Suchsystem 10 umfasst weiterhin eine Benutzerschnittstellenvorrichtung UI, die mindestens eine Schnittstelle aufweist zum Koppeln mit der Radiovorrichtung R. Die Benutzerschnittstellenvorrichtung UI umfasst eine Ausgabevorrichtung 16, die sogenannte Benutzerschnittstelle, zur Ausgabe von von einem Benutzer wahrnehmbarer Suchinformation. Diese Suchinformation ist aus der Richtung des ermittelten Feldvektors abgeleitet. Wie deutlich zu erkennen ist, sind die Radiovorrichtung R und die Benutzerschnittstellenvorrichtung UI jeweils als separate Baueinheiten ausgebildet, die jeweils von einem eigenen Gehäuse umfasst sind.

In dem dargestellten Ausführungsbeispiel umfasst die Radiovorrichtung R einen ersten Lagesensor 18a und die Benutzerschnittstellenvorrichtung UI einen zweiten Lagesensor 18b. Der Lagesensor 18a ist ausgelegt, die Orientierung der Radiovorrichtung R relativ zu einem externen, systemfremden Bezugssystem zu bestimmen, während der Lagesensor 18b ausgelegt ist, die Orientierung der Benutzerschnittstellenvorrichtung UI relativ zu dem externen, systemfremden Bezugssystem zu bestimmen. Bei dem externen, systemfremden Bezugssystem kann es sich beispielsweise um das Erdmagnetfeld handeln, wobei in Fig. 1 schematisch die Richtung "Norden" durch ein "N" gekennzeichnet ist. Der Winkel a gibt die Orientierung der Bezugsachse BA1 der Radiovorrichtung R bezogen auf magnetisch Nord N wieder. Die Bezugsachse BA2 der Benutzerschnittstellenvorrichtung UI schließt mit magnetisch Nord N einen Winkel b ein. Der Winkel β, der die Richtung des Feldvektors bezogen auf die Bezugsachse BA2 der Benutzerschnittstellenvorrichtung UI wiedergibt, lässt sich demnach berechnen zu β=(a+α)-b.

Fig. 2 zeigt in schematischer Darstellung ein zweites Ausführungsbeispiel eines erfindungsgemäßen Suchsystems 10, wobei die Radiovorrichtung R Mittel 20 zum Erzeugen eines systemeigenen Bezugssystems umfasst. Die Benutzerschnittstellenvorrichtung UI umfasst einen Lagesensor 22 zum Bestimmen einer Orientierung relativ zu diesem systemeigenen Bezugssystem. Die Mittel 20 zum Erzeugen eines systemeigenen Bezugssystems können ausgelegt sein, ein Feld, insbesondere ein magnetisches oder elektrisches Feld, zu erzeugen. Der Lagesensor 22 kann ausgelegt sein, dieses Feld zur Bestimmung der Orientierung der Benutzerschnittstellenvorrichtung UI relativ zu dem systemeigenen Bezugssystem auszuwerten. Vorliegend schließt die Bezugsachse BA1 der Radiovorrichtung R mit dem Feldvektor den Winkel α ein, während die Bezugsachse BA1 der Radiovorrichtung R und die Bezugsachse BA2 der Benutzerschnittstellenvorrichtung UI derart relativ zueinander orientiert sind, dass sie den Winkel γ einschließen. Die Richtung des Feldvektors schließt demnach bezogen auf die Bezugsachse BA2 der Benutzerschnittstellenvorrichtung UI den Winkel β=α-γ ein.

Wie für den Fachmann offensichtlich, können die Mittel 20 zum Erzeugen eines systemeigenen Bezugssystems auch in der Benutzerschnittstellenvorrichtung UI vorgesehen sein, während dann der Lagesensor 22 in der Radiovorrichtung R vorzusehen ist. Wie bereits erwähnt, kann zusätzlich mindestens ein Lagesensor vorgesehen sein, um die ermittelte Richtung des Feldvektors bezogen auf die Bezugsachse BA2 der Benutzerschnittstellenvorrichtung UI auf magnetisch Nord N zu beziehen.

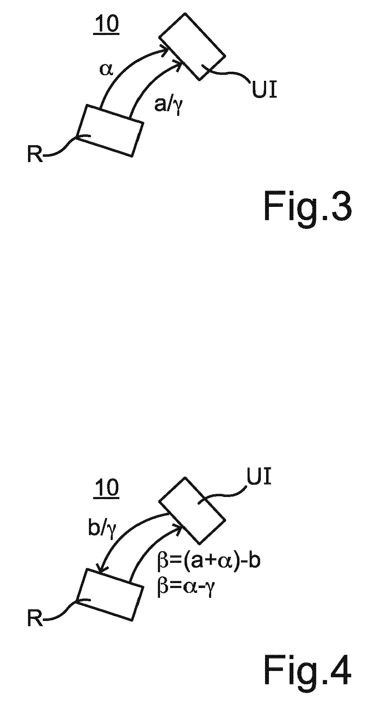

Fig. 3 zeigt in schematischer Darstellung ein erstes Ausführungsbeispiel im Hinblick darauf, wo die Umrechnung der Orientierung des gemessenen Feldvektors in das Koordinatensystem der Benutzerschnittstellenvorrichtung UI vorgenommen wird. In der dargestellten Variante ist die Benutzerschnittstellenvorrichtung UI ausgelegt, die von den Bestimmungsmitteln 18a, 18b, 20, 22 bestimmte relative Orientierung der Benutzerschnittstellenvorrichtung UI zur Radiovorrichtung R mit der ermittelten Richtung des Feldvektors zu kombinieren. In dem Fall von Fig. 1, das heißt sowohl die Radiovorrichtung R als auch die Benutzerschnittstellenvorrichtung UI umfassen einen Lagesensor 18a, 18b zur Ermittlung der Orientierung der jeweiligen Vorrichtung relativ zu einem externen, systemfremden Bezugssystem, überträgt die Radiovorrichtung R ihre eigene gemessene Orientierung zur Benutzerschnittstellenvorrichtung UI. Die Benutzerschnittstellenvorrichtung UI errechnet aus der empfangenen Orientierung der Radiovorrichtung R und der eigenen gemessenen Orientierung den Korrekturfaktor a-b und ermittelt daraus β=a-b+α. Für den Fall, dass die Mittel 20 zum Erzeugen eines systemeigenen Bezugssystems in der Radiovorrichtung R angeordnet sind und der Lagesensor 22 in der Benutzerschnittstellenvorrichtung UI, kann die Benutzerschnittstellenvorrichtung Ul selbst die relative Orientierung der Benutzerschnittstellenvorrichtung UI zur Radiovorrichtung R bestimmen. Sind jedoch die Mittel 20 zum Erzeugen eines systemeigenen Bezugssystems in der Benutzerschnittstellenvorrichtung UI angeordnet und der Lagesensor 22 in der Radiovorrichtung R, so ist die Radiovorrichtung R ausgelegt, die relative durch den Winkel γ gekennzeichnete Lage der Benutzerschnittstellenvorrichtung UI zur Radiovorrichtung R zu bestimmen. In diesem Fall überträgt die Radiovorrichtung R den Winkel γ an die Benutzerschnittstellenvorrichtung UI.

Alternativ, siehe Fig. 4, kann die Radiovorrichtung R ausgelegt sein, die von den Bestimmungsmitteln 18a, 18b, 20, 22 bestimmte relative Orientierung der Benutzerschnittstellenvorrichtung UI zur Radiovorrichtung R mit der ermittelten Richtung des Feldvektors zu kombinieren. In dem Fall, in dem sowohl die Benutzerschnittstellenvorrichtung UI als auch die Radiovorrichtung R Lagesensoren umfassen, die die Orientierung der entsprechenden Vorrichtung relativ zu einem externen, systemfremden Bezugssystem ermöglichen, übermittelt die Benutzerschnittstellenvorrichtung UI ihre eigene Orientierung b zur Radiovorrichtung R. Diese errechnet aus der empfangenen Orientierung b der Benutzerschnittstellenvorrichtung UI und der eigenen gemessenen Orientierung a den Korrekturfaktor a-b und übermittelt den Winkel β an die Benutzerschnittstellenvorrichtung UI.

Für den Fall, dass Mittel 20 zum Erzeugen eines systemeigenen Bezugssystems sowie ein Lagesensor 22 zum Bestimmen einer Orientierung relativ zu diesem systemeigenen Bezugssystem vorgesehen sind, müssen wiederum zwei Fälle unterschieden werden: Sind die Mittel 20 zum Erzeugen eines systemeigenen Bezugssystems in der Radiovorrichtung R angeordnet, misst die Benutzerschnittstellenvorrichtung UI ihre eigene Orientierung γ relativ zum von der Radiovorrichtung R erzeugten Koordinatensystem und überträgt diese zur Radiovorrichtung R. Diese überträgt den Winkel β=α-γ an die Benutzerschnittstellenvorrichtung UI. Sind die Mittel 20 zum Erzeugen eines systemeigenen Bezugssystems in der Benutzerschnittstellenvorrichtung UI angeordnet, misst die Radiovorrichtung R ihre eigene Orientierung relativ zu dem von der Benutzerschnittstellenvorrichtung UI erzeugten Koordinatensystem und nutzt diese unmittelbar für die Umrechnung, das heißt die Radiovorrichtung R überträgt den Winkel β an die Benutzerschnittstellenvorrichtung UI.

Wie bereits erwähnt, kann der jeweilige Lagesensor ausgelegt sein, die Orientierung der jeweiligen Vorrichtung zweidimensional zu ermitteln. Alternativ kann vorgesehen sein, dass der jeweilige Lagesensor ausgelegt ist, die Orientierung der jeweiligen Vorrichtung dreidimensional zu ermitteln. Die Schnittstelle zwischen der Radiovorrichtung R und der Benutzerschnittstellenvorrichtung UI ist bevorzugt eine Luftschnittstelle, insbesondere eine Funkschnittstelle. Alternativ kann sie eine flexible mechanische Schnittstelle darstellen, insbesondere eine Kabelschnittstelle.

## Patentansprüche

1. Suchsystem (10) zur Verschüttetensuche umfassend:
- eine Radiovorrichtung (R) mit einer Empfangsvorrichtung, die mindestens eine Empfangsantenne (12) umfasst und ausgelegt ist, das Feld einer Senderantenne zu empfangen, wobei die Radiovorrichtung (R) ausgelegt ist, die Richtung (α) des Feldvektors der Senderantenne relativ zu der mindestens einen Empfangsantenne (12) zu ermitteln; sowie
- eine Benutzerschnittstellenvorrichtung (UI) mit mindestens einer Schnittstelle zum Koppeln mit der Radiovorrichtung (R) sowie mindestens einer Ausgabevorrichtung (16) zur Ausgabe von von einem Benutzer wahrnehmbarer, aus der Richtung (α) des ermittelten Feldvektors abgeleiteter Suchinformation;
- wobei die Radiovorrichtung (R) und die Benutzerschnittstellenvorrichtung (UI) jeweils als separate Baueinheiten ausgebildet sind, die jeweils von einem eigenen Gehäuse umfasst sind,
**dadurch gekennzeichnet,**
**dass** das Suchsystem (10) Bestimmungsmittel (18a, 18b; 20, 22) zum Bestimmen der relativen Orientierung der Benutzerschnittstellenvorrichtung (UI) zur Radiovorrichtung (R) umfasst.

2. Suchsystem (10) nach Anspruch 1,
**dadurch gekennzeichnet,**
**dass** das Suchsystem (10) weiterhin ausgelegt ist, die von den Bestimmungsmitteln (18a, 18b; 20, 22) bestimmte relative Orientierung der Benutzerschnittstellenvorrichtung (UI) zur Radiovorrichtung (R) mit der ermittelten Richtung (α) des Feldvektors derart zu kombinieren, dass über die Ausgabevorrichtung (16) die Richtung (β) des Feldvektors relativ zur Orientierung der Benutzerschnittstellenvorrichtung (UI) ausgebbar ist.

3. Suchsystem (10) nach einem der Ansprüche 1 oder 2,
**dadurch gekennzeichnet,**
**dass** die Bestimmungsmittel (18a, 18b; 20, 22) in der Benutzerschnittstellenvorrichtung (UI) und/oder der Radiovorrichtung (R) angeordnet sind.

4. Suchsystem (10) nach einem der vorhergehenden Ansprüche,
**dadurch gekennzeichnet,**
**dass** die Bestimmungsmittel (18a, 18b; 20, 22) einen ersten (18a) und einen zweiten Lagesensor (18b) umfassen, wobei die Radiovorrichtung (R) den ersten Lagesensor (18a) umfasst und die Benutzerschnittstellenvorrichtung (UI) den zweiten Lagesensor (18b), wobei der erste Lagesensor (18a) ausgelegt ist, die Orientierung der Radiovorrichtung (R) relativ zu einem externen, systemfremden Bezugssystem zu bestimmen, wobei der zweite Lagesensor (18b) ausgelegt ist, die Orientierung der Benutzerschnittstellenvorrichtung (UI) relativ zu dem externen, systemfremden Bezugssystem zu bestimmen.

5. Suchsystem (10) nach Anspruch 4,
**dadurch gekennzeichnet,**
**dass** der erste (18a) und der zweite Lagesensor (18b) ausgelegt sind, eine Orientierung gegenüber dem Erdmagnetfeld, einem globalen oder lokalen Positionierungssystem, insbesondere GPS oder Galileo, zu bestimmen.

6. Suchsystem (10) nach einem der Ansprüche 1 bis 4,
**dadurch gekennzeichnet,**
**dass** die Bestimmungsmittel (18a, 18b; 20, 22) Mittel (20) zum Erzeugen eines systemeigenen Bezugssystems sowie zumindest einen Lagesensor (22) zum Bestimmen einer Orientierung relativ zu diesem systemeigenen Bezugssystems umfassen, wobei die Mittel (20) zum Erzeugen des systemeigenen Bezugssystem in einer ersten Vorrichtung aus der Gruppe der Radiovorrichtung (R) und der Benutzerschnittstellenvorrichtung (UI) angeordnet sind, wobei der Lagesensor (22) in der zweiten Vorrichtung aus dieser Gruppe angeordnet ist.

7. Suchsystem (10) nach Anspruch 6,
**dadurch gekennzeichnet,**
**dass** die Mittel (20) zum Erzeugen eines systemeigenen Bezugssystems ausgelegt sind, ein Feld, insbesondere ein magnetisches oder elektrisches Feld, zu erzeugen, wobei die Mittel (20) zur Bestimmung der Orientierung relativ zu diesem systemeigenen Bezugssystem mindestens einen Lagesensor (22) umfassen, der ausgelegt ist, das Feld zur Bestimmung der Orientierung relativ zu dem systemeigenen Bezugssystem auszuwerten.

8. Suchsystem (10) nach Anspruch 2,
**dadurch gekennzeichnet,**
**dass** die Benutzerschnittstellenvorrichtung (UI) ausgelegt ist, die von den Bestimmungsmitteln (18a, 18b; 20, 22) bestimmte relative Orientierung der Benutzerschnittstellenvorrichtung (UI) zur Radiovorrichtung (R) mit der ermittelten Richtung (β) des Feldvektors zu kombinieren.

9. Suchsystem (10) nach einer Kombination der Ansprüche 4 und 8,
**dadurch gekennzeichnet,**
**dass** die Radiovorrichtung (R) ausgelegt ist, die vom ersten Lagesensor (18a) bestimmte Orientierung an die Benutzerschnittstellenvorrichtung (UI) zu übertragen, wobei die Benutzerschnittstellenvorrichtung (UI) ausgelegt ist, ihre relative Orientierung zur Radiovorrichtung (R) zu bestimmen.

10. Suchsystem (10) nach einer Kombination der Ansprüche 6 und 8,
**dadurch gekennzeichnet,**
**dass** die Mittel (20) zum Erzeugen eines systemeigenen Bezugssystems in der Radiovorrichtung (R) angeordnet sind, wobei der Lagesensor (22) in der Benutzerschnittstellenvorrichtung (UI) angeordnet ist, wobei die Benutzerschnittstellenvorrichtung (UI) ausgelegt ist, die relative Orientierung der Benutzerschnittstellenvorrichtung (UI) zur Radiovorrichtung (R) zu bestimmen.

11. Suchsystem (10) nach einer Kombination der Ansprüche 6 und 8,
**dadurch gekennzeichnet,**
**dass** die Mittel (20) zum Erzeugen eines systemeigenen Bezugssystems in der Benutzerschnittstellenvorrichtung (UI) angeordnet sind, wobei der Lagesensor (22) in der Radiovorrichtung (R) angeordnet ist, wobei die Radiovorrichtung (R) ausgelegt ist, die relative Orientierung der Benutzerschnittstellenvorrichtung (UI) zur Radiovorrichtung (R) zu bestimmen und an die Benutzerschnittstellenvorrichtung (UI) zu übertragen.

12. Suchsystem (10) nach Anspruch 2,
**dadurch gekennzeichnet,**
**dass** die Radiovorrichtung (R) ausgelegt ist, die von den Bestimmungsmitteln (18a, 18b; 20, 22) bestimmte relative Orientierung der Benutzerschnittstellenvorrichtung (UI) zur Radiovorrichtung (R) mit der ermittelten Richtung (β) des Feldvektors zu kombinieren.

13. Suchsystem (10) nach einer Kombination der Ansprüche 4 und 12,
**dadurch gekennzeichnet,**
**dass** die Benutzerschnittstellenvorrichtung (UI) ausgelegt ist, die vom zweiten Lagesensor (18b) bestimmte Orientierung an die Radiovorrichtung (R) zu übertragen, wobei die Radiovorrichtung (R) ausgelegt ist, ihre relative Orientierung zur Benutzerschnittstellenvorrichtung (UI) zu bestimmen.

14. Suchsystem (10) nach einer Kombination der Ansprüche 6 und 12,
**dadurch gekennzeichnet,**
**dass** die Mittel (20) zum Erzeugen eines systemeigenen Bezugssystems in der Radiovorrichtung (R) angeordnet sind, wobei der Lagesensor (22) in der Benutzerschnittstellenvorrichtung (UI) angeordnet ist, wobei die Benutzerschnittstellenvorrichtung (UI) ausgelegt ist, die relative Orientierung der Benutzerschnittstellenvorrichtung (UI) zur Radiovorrichtung (R) zu bestimmen und an die Radiovorrichtung (R) zu übertragen.

15. Suchsystem (10) nach einer Kombination der Ansprüche 6 und 12,
**dadurch gekennzeichnet,**
**dass** die Mittel (20) zum Erzeugen eines systemeigenen Bezugssystems in der Benutzerschnittstellenvorrichtung (UI) angeordnet sind, wobei der Lagesensor (22) in der Radiovorrichtung (R) angeordnet ist, wobei die Radiovorrichtung (R) ausgelegt ist, die relative Orientierung der Benutzerschnittstellenvorrichtung (UI) zur Radiovorrichtung (R) zu bestimmen.

16. Suchsystem (10) nach einem der vorhergehenden Ansprüche,
**dadurch gekennzeichnet,**
**dass** die Ausgabevorrichtung (16) eine Anzeigevorrichtung darstellt, wobei die Suchinformation eine Richtungsinformation, insbesondere einen Pfeil, darstellt, die die Richtung (α) des Feldvektors der Sendeantenne bezogen auf die Orientierung der Benutzerschnittstellenvorrichtung (UI) wiedergibt.

17. Suchsystem (10) nach einem der Ansprüche 4 bis 16,
**dadurch gekennzeichnet,**
**dass** der jeweilige Lagesensor (18a; 18b) ausgelegt sind, die Orientierung der jeweiligen Vorrichtung zweidimensional zu ermitteln.

18. Suchsystem (10) nach einem der Ansprüche 4 bis 16,
**dadurch gekennzeichnet,**
**dass** der jeweilige Lagesensor (18a; 18b) ausgelegt ist, die Orientierung der jeweiligen Vorrichtung dreidimensional zu ermitteln.

19. Suchsystem (10) nach einem der vorhergehenden Ansprüche,
**dadurch gekennzeichnet,**
**dass** die erste Schnittstelle eine Luftschnittstelle, insbesondere eine Funkschnittstelle, oder eine flexible mechanische Schnittstelle, insbesondere eine Kabelschnittstelle, darstellt.

20. Verfahren zum Suchen eines Verschütteten mittels eines Suchsystems (10) umfassend eine Radiovorrichtung (R) mit einer Empfangsvorrichtung, die mindestens eine Empfangsantenne (12) umfasst und ausgelegt ist, das Feld einer Senderantenne zu empfangen, wobei die Radiovorrichtung (R) ausgelegt ist, die Richtung (α) des Feldvektors der Senderantenne relativ zu der mindestens einen Empfangsantenne (12) zu ermitteln; sowie eine Benutzerschnittstellenvorrichtung (UI) mit mindestens einer Schnittstelle zum Koppeln mit der Radiovorrichtung (R) sowie mindestens einer Ausgabevorrichtung (16) zur Ausgabe von von einem Benutzer wahrnehmbarer, aus der Richtung (α) des ermittelten Feldvektors abgeleiteter Suchinformation; wobei die Radiovorrichtung (R) und die Benutzerschnittstellenvorrichtung (UI) jeweils als separate Baueinheiten ausgebildet sind, die jeweils von einem eigenen Gehäuse umfasst sind, **gekennzeichnet durch** folgenden Schritt:
a) Bestimmen der relativen Orientierung der Benutzerschnittstellenvorrichtung (UI) zur Radiovorrichtung (R).

## Claims

1. Search system (10) for searching buried persons, including:
- a radio device (R) with a receiving device including at least one receiving antenna (12) and adapted to receive the field of a transmitter antenna, wherein the radio device (R) is adapted to determine the direction (α) of the field vector of the transmitter antenna relative to the at least one receiving antenna (12); as well as
- a user interface device (UI) with at least one interface for interfacing with the radio device (R), as well as at least one output device (16) for outputting search information derived from the direction (α) of the determined field vector and perceivable by a user;
- wherein the radio device (R) and the user interface device (UI) are each formed as separate units, which are each encompassed by an own housing,
**characterized in that**
the search system (10) includes determining means (18a, 18b; 20, 22) for determining the relative orientation of the user interface device (UI) to the radio device (R).

2. Search system (10) according to claim 1,
**characterized in that**
the search system (10) is further adapted to combine the relative orientation of the user interface device (UI) to the radio device (R) determined by the determining means (18a, 18b; 20, 22) with the determined direction (α) of the field vector such that the direction (β) of the field vector relative to the orientation of the user interface device (UI) can be output via the output device (16).

3. Search system (10) according to any one of claims 1 or 2,
**characterized in that**
the determining means (18a, 18b; 20, 22) are disposed in the user interface device (UI) and/or in the radio device (R).

4. Search system (10) according to any one of the preceding claims,
**characterized in that**
the determining means (18a, 18b; 20, 22) include a first (18a) and a second position sensor (18b), wherein the radio device (R) includes the first position sensor (18a) and the user interface device (UI) includes the second position sensor (18b), wherein the first position sensor (18a) is adapted to determine the orientation of the radio device (R) relative to an external alien reference system, wherein the second position sensor (18b) is adapted to determine the orientation of the user interface device (UI) relative to the external alien reference system.

5. Search system (10) according to claim 4,
**characterized in that**
the first (18a) and the second position sensor (18b) are adapted to determine an orientation with respect to the earth's magnetic field, a global or local positioning system, in particular GPS or Galileo.

6. Search system (10) according to any one of claims 1 to 4,
**characterized in that**
the determining means (18a, 18b; 20, 22) include means (20) for generating a native reference system as well as at least one position sensor (22) for determining an orientation relative to this native reference system, wherein the means (20) for generating the native reference system are disposed in a first device from the group of the radio device (R) and the user interface device (UI), wherein the position sensor (22) is disposed in the second device from this group.

7. Search system (10) according to claim 6,
**characterized in that**
the means (20) for generating a native reference system are adapted to generate a field, in particular a magnetic or electric field, wherein the means (20) for determining the orientation relative to this native reference system include at least one position sensor (22), which is adapted to evaluate the field for determining the orientation relative to the native reference system.

8. Search system (10) according to claim 2,
**characterized in that**
the user interface device (UI) is adapted to combine the relative orientation of the user interface device (UI) to the radio device (R) determined by the determining means (18a, 18b; 20, 22) with the determined direction (β) of the field vector.

9. Search system (10) according to a combination of claims 4 and 8,
**characterized in that**
the radio device (R) is adapted to transmit the orientation determined by the first position sensor (18a) to the user interface device (UI), wherein the user interface device (UI) is adapted to determine its relative orientation to the radio device (R).

10. Search system (10) according to a combination of claims 6 and 8,
**characterized in that**
the means (20) for generating a native reference system are disposed in the radio device (R), wherein the position sensor (22) is disposed in the user interface device (UI), wherein the user interface device (UI) is adapted to determine the relative orientation of the user interface device (UI) to the radio device (R).

11. Search system (10) according to a combination of claims 6 and 8,
**characterized in that**
the means (20) for generating a native reference system are disposed in the user interface device (UI), wherein the position sensor (22) is disposed in the radio device (R), wherein the radio device (R) is adapted to determine the relative orientation of the user interface device (UI) to the radio device (R) and to transmit it to the user interface device (UI).

12. Search system (10) according to claim 2,
**characterized in that**
the radio device (R) is adapted to combine the relative orientation of the user interface device (UI) to the radio device (R) determined by the determining means (18a, 18b; 20, 22) with the determined direction (β) of the field vector.

13. Search system (10) according to a combination of claims 4 and 12,
**characterized in that**
the user interface device (UI) is adapted to transmit the orientation determined by the second position sensor (18b) to the radio device (R), wherein the radio device (R) is adapted to determine its relative orientation to the user interface device (UI).

14. Search system (10) according to a combination of claims 6 and 12,
**characterized in that**
the means (20) for generating a native reference system are disposed in the radio device (R), wherein the position sensor (22) is disposed in the user interface device (UI), wherein the user interface device (UI) is adapted to determine the relative orientation of the user interface device (UI) to the radio device (R) and to transmit it to the radio device (R).

15. Search system (10) according to a combination of claims 6 and 12,
**characterized in that**
the means (20) for generating a native reference system are disposed in the user interface device (UI), wherein the position sensor (22) is disposed in the radio device (R), wherein the radio device (R) is adapted to determine the relative orientation of the user interface device (UI) to the radio device (R).

16. Search system (10) according to any one of the preceding claims,
**characterized in that**
the output device (16) constitutes a display device, wherein the search information represents direction information, in particular an arrow, which reflects the direction (α) of the field vector of the transmitting antenna related to the orientation of the user interface device (UI).

17. Search system (10) according to any one of claims 4 to 16,
**characterized in that**
the respective position sensor (18a; 18b) is adapted to two-dimensionally determine the orientation of the respective device.

18. Search system (10) according to any one of claims 4 to 16,
**characterized in that**
the respective position sensor (18a; 18b) is adapted to three-dimensionally determine the orientation of the respective device.

19. Search system (10) according to any one of the preceding claims,
**characterized in that**
the first interface constitutes an air interface, in particular a radio interface, or a flexible mechanical interface, in particular a cable interface.

20. Method for searching a buried person by means of a search system (10) including a radio device (R) with a receiving device including at least one receiving antenna (12) and adapted to receive the field of a transmitter antenna, wherein the radio device (R) is adapted to determine the direction (α) of the field vector of the transmitter antenna relative to the at least one receiving antenna (12); as well as a user interface device (UI) with at least one interface for interfacing with the radio device (R), as well as at least one output device (16) for outputting search information derived from the direction (α) of the determined field vector and perceivable by a user; wherein the radio device (R) and the user interface device (UI) are each formed as separate units each encompassed by an own housing, **characterized by** the following step of:
a) determining the relative orientation of the user interface device (UI) to the radio device (R).

## Revendications

1. Système de recherche (10), destiné à la recherche de personnes ensevelies, comprenant :
- un appareil radio (R) avec un appareil de réception, qui comprend au moins une antenne réceptrice (12) et est conçu pour recevoir le champ d'une antenne émettrice, l'appareil radio (R) étant conçu pour déterminer la direction (α) du vecteur champ de l'antenne émettrice par rapport à la au moins une antenne réceptrice (12), ainsi
- qu'un appareil Interface utilisateur (IU) avec au moins une interface, destinée au couplage avec l'appareil radio (R), ainsi qu'au moins un dispositif de sortie (16), destiné à produire des informations de recherche, perceptibles par un utilisateur, déduites de la direction (α) du vecteur champ déterminé ;
- l'appareil radio (R) et l'appareil Interface utilisateur (IU) étant constitués respectivement comme des modules séparés, qui sont entourés respectivement d'un boîtier propre,
**caractérisé en ce**
**que** le système de recherche (10) comprend des moyens de détermination (18a, 18b ; 20, 22), destinés à déterminer l'orientation relative de l'appareil Interface utilisateur (IU) par rapport à l'appareil radio (R).

2. Système de recherche (10) selon la revendication 1,
**caractérisé en ce**
**que** le système de recherche (10) est conçu en outre pour combiner l'orientation relative de l'appareil Interface utilisateur (IU), déterminée par les moyens de détermination (18a, 18b ; 20, 22), par rapport à l'appareil radio (R), avec la direction (α) déterminée du vecteur champ, de telle sorte que la direction (ß) du vecteur champ peut être produite par rapport à l'orientation de l'appareil Interface utilisateur (IU) par l'intermédiaire du dispositif de sortie (16).

3. Système de recherche (10) selon l'une des revendications 1 ou 2, **caractérisé en ce**
**que** les moyens de détermination (18a, 18b ; 20, 22) sont agencés dans l'appareil Interface utilisateur (IU) et / ou l'appareil radio (R).

4. Système de recherche (10) selon l'une des revendications précédentes,
**caractérisé en ce**
**que** les moyens de détermination (18a, 18b ; 20, 22) comprennent un premier (18a) et un second (18b) détecteur de position, l'appareil radio (R) comprenant le premier détecteur de position (18a) et l'appareil Interface utilisateur (IU) le second détecteur de position (18b), le premier détecteur de position (18a) étant conçu pour déterminer l'orientation de l'appareil radio (R)par rapport à un système de référence extérieur, étranger au système, le second détecteur de position (18b) étant conçu pour déterminer l'orientation de l'appareil Interface utilisateur (IU) par rapport au système de référence extérieur, étranger au système.

5. Système de recherche (10) selon la revendication 4,
**caractérisé en ce**
**que** le premier (18a) et le second (18b) détecteur de position sont conçus pour déterminer une orientation par rapport au champ magnétique terrestre, un système de positionnement mondial ou local, en particulier GPS ou Galileo.

6. Système de recherche (10) selon l'une des revendications 1 à 4, **caractérisé en ce**
**que** les moyens de détermination (18a, 18b ; 20, 22) comprennent des moyens (20), destinés à produire un système de référence propre au système, ainsi qu'au moins un détecteur de position (22), destiné à déterminer une orientation par rapport à ce système de référence propre au système, les moyens (20) étant agencés pour produire le système de référence propre au système dans un premier appareil du groupe composé de l'appareil radio (R) et de l'appareil Interface utilisateur (IU), le détecteur de position (22) étant agencé dans le deuxième appareil de ce groupe.

7. Système de recherche (10) selon la revendication 6,
**caractérisé en ce**
**que** les moyens (20), destinés à produire un système de référence propre au système, sont conçus pour produire un champ, en particulier un champ magnétique ou électrique, les moyens (20), destinés à déterminer l'orientation par rapport à ce système de référence propre au système, comprenant au moins un détecteur de position (22), qui est conçu pour évaluer le champ, destiné à déterminer l'orientation par rapport au système de référence propre au système.

8. Système de recherche (10) selon la revendication 2,
**caractérisé en ce**
**que** l'appareil Interface utilisateur (IU) est conçu pour combiner l'orientation relative, déterminée par les moyens de détermination (18a, 18b ; 20, 22), de l'appareil Interface utilisateur (IU) par rapport à l'appareil radio (R), avec la direction (ß) déterminée du vecteur champ.

9. Système de recherche (10) selon une combinaison des revendications 4 et 8,
**caractérisé en ce**
**que** l'appareil radio (R) est conçu pour transférer l'orientation, déterminée par le premier détecteur de position (18a), à l'appareil Interface utilisateur (IU), l'appareil Interface utilisateur (IU) étant conçu pour déterminer son orientation relative par rapport à l'appareil radio (R).

10. Système de recherche (10) selon une combinaison des revendications 6 et 8,
**caractérisé en ce**
**que** les moyens (20), destinés à produire un système de référence propre au système, sont agencés dans l'appareil radio (R), le détecteur de position (22) étant agencé dans l'appareil Interface utilisateur (IU), l'appareil Interface utilisateur (IU) étant conçu pour déterminer l'orientation relative de l'appareil Interface utilisateur (IU) par rapport à l'appareil radio (R).

11. Système de recherche (10) selon une combinaison des revendications 6 et 8,
**caractérisé en ce**
**que** les moyens (20), destinés à produire un système de référence propre au système, sont agencés dans l'appareil Interface utilisateur (IU), le détecteur de position (22) étant agencé dans l'appareil radio (R), l'appareil radio (R) étant conçu pour déterminer l'orientation relative de l'appareil Interface utilisateur (IU) par rapport à l'appareil radio (R) et pour la transférer à l'appareil Interface utilisateur (IU).

12. Système de recherche (10) selon la revendication 2,
**caractérisé en ce**
**que** l'appareil radio (R) est conçu pour combiner l'orientation relative de l'appareil Interface utilisateur (IU) par rapport à l'appareil radio (R), déterminée par les moyens de détermination (18a, 18b ; 20, 22), avec la direction (ß) déterminée du vecteur champ.

13. Système de recherche (10) selon une combinaison des revendications 4 et 12,
**caractérisé en ce**
**que** l'appareil Interface utilisateur (IU) est conçu pour transférer l'orientation, déterminée par le second détecteur de position (18b), à l'appareil radio (R), l'appareil radio (R) étant conçu pour déterminer son orientation relative par rapport à l'appareil Interface utilisateur (IU).

14. Système de recherche (10) selon une combinaison des revendications 6 et 12,
**caractérisé en ce**
**que** les moyens (20), destinés à produire un système de référence propre au système, sont agencés dans l'appareil radio (R), le détecteur de position (22) étant agencé dans l'appareil Interface utilisateur (IU), l'appareil Interface utilisateur (IU) étant conçu pour déterminer l'orientation relative de l'appareil Interface utilisateur (IU) par rapport à l'appareil radio (R) et pour la transférer à l'appareil radio (R).

15. Système de recherche (10) selon une combinaison des revendications 6 et 12,
**caractérisé en ce**
**que** les moyens (20), destinés à produire un système de référence propre au système, sont agencés dans l'appareil Interface utilisateur (IU), le détecteur de position (22) étant agencé dans l'appareil radio (R), l'appareil radio (R) étant conçu pour déterminer l'orientation relative de l'appareil Interface utilisateur (IU) par rapport à l'appareil radio (R).

16. Système de recherche (10) selon l'une des revendications précédentes,
**caractérisé en ce**
**que** le dispositif de sortie (16) représente un appareil d'affichage, les informations de recherche représentant des informations de direction, en particulier une flèche, qui restitue la direction (α) du vecteur champ de l'antenne émettrice par rapport à l'orientation de l'appareil Interface utilisateur (IU).

17. Système de recherche (10) selon l'une des revendications 4 à 16,
**caractérisé en ce**
**que** les détecteurs de position (18a ; 18b) respectifssont conçus pour déterminer l'orientation de l'appareil respectif en deux dimensions.

18. Système de recherche (10) selon l'une des revendications 4 à 16,
**caractérisé en ce**
**que** le détecteur de position (18a ; 18b) respectif est conçu pour déterminer l'orientation de l'appareil respectif en trois dimensions.

19. Système de recherche (10) selon l'une des revendications précédentes,
**caractérisé en ce**
**que** la première interface représente une interface aérienne, en particulier une interface radio ou une interface mécanique flexible, en particulier une interface câblée.

20. Procédé destiné à la recherche d'une personne ensevelie au moyen d'un système de recherche (10), comprenant un appareil radio (R) avec un appareil récepteur, qui comprend au moins une antenne réceptrice (12) et est conçu pour recevoir le champ d'une antenne émettrice, l'appareil radio (R) étant conçu pour déterminer la direction (α) du vecteur champ de l'antenne émettrice par rapport à la au moins une antenne réceptrice (12), ainsi qu'un appareil Interface utilisateur (IU) avec au moins une interface destinée au couplage avec l'appareil radio (R), ainsi qu'au moins un dispositif de sortie (16), destiné à produire des informations de recherche, perceptibles par un utilisateur, déduites de la direction (α) du vecteur champ déterminé ; l'appareil radio (R) et l'appareil Interface utilisateur (IU) étant constitués respectivement comme des modules séparés, qui sont entourés respectivement d'un boîtier propre,
**caractérisé par** l'étape suivante consistant à
a) déterminer l'orientation relative de l'appareil Interface utilisateur (IU) par rapport à l'appareil radio (R).
